# FASCICULE DE BREVET EUROPEEN

(11) **EP 2 794 357 B1**
(45) Date de publication et mention de la délivrance du brevet: **13.07.2016**
(21) Numéro de dépôt: 12812289.2
(22) Date de dépôt: 03.12.2012
(51) Int. Cl.: B60R 16/04, B60K 6/12, B60K 1/04

(54) **VEHICULE HYBRIDE HYDRAULIQUE A STOCKEUR D'ENERGIE ELECTRIQUE IMPLANTE DE MANIERE OPTIMISEE**
HYDRAULISCH BETRIEBENES HYBRIDFAHRZEUG MIT EINEM OPTIMAL ANGEORDNETEN STROMSPEICHER
HYDRAULICALLY POWERED HYBRID VEHICLE WITH OPTIMALLY SITUATED ELECTRIC ENERGY STORE

(30) Priorité: 22.12.2011 FR 1162322
(43) Date de publication de la demande: 29.10.2014
(73) Titulaire: Technoboost, 75116 Paris (FR)
(72) Inventeur: FIORINI, Nelson, F-95450 Sagy (FR); PERRON, Frederic, F-94600 Choisy Le Roi (FR)
(74) Mandataire: Rosenberg, Muriel Sylvie
(86) Numéro de dépôt international: PCT/FR2012/052787
(87) Numéro de publication internationale: WO 2013/093276

(56) Documents cités:
- WO-A2-2008/072044
- US-A1- 2005 167 178
- US-A1- 2008 251 302

## Description

La présente invention concerne un véhicule hybride utilisant une énergie hydraulique, dans lequel sont implantées des cellules de stockage d'énergie électrique de type « supercondensateurs » ou « supercapacités » désignés également par UCAPs, pour alimenter le réseau électrique de bord du véhicule et/ou suppléer la batterie standard du véhicule, notamment dans les phases de démarrage du moteur thermique.

Les véhicules hybrides comportent une chaîne de traction comprenant un moteur thermique qui entraîne une pompe hydraulique, afin de recharger des accumulateurs de pression hydraulique pour stocker cette énergie.

Il est connu de la demande de brevet en France n°1153273 (FR-A-2974035), déposée par la demanderesse, d'implanter les accumulateurs de pression de forme tubulaire allongée, sous le sous-bassement du véhicule.

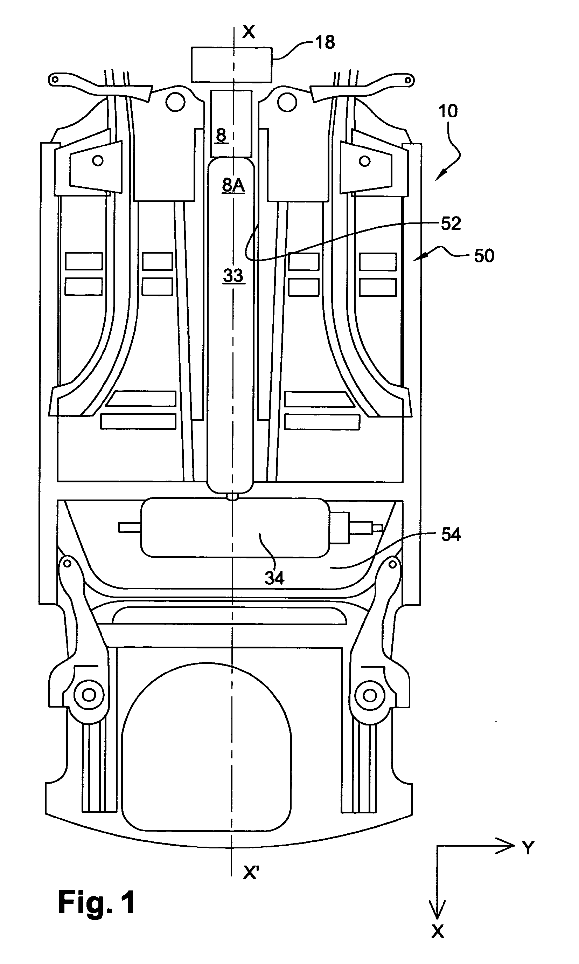

La figure 1 illustre, par une vue de dessous, schématique et partielle, un véhicule hybride hydraulique 10 comprenant une transmission hydrostatique dont les principaux composants sont notamment le moteur hydraulique 18, le bloc hydraulique 8 et les accumulateurs de pression 33, 34.

Les accumulateurs de pression 33, 34 constituent chacun un tube allongé de section circulaire réduite, ce qui est favorable pour limiter les contraintes dans cet accumulateur. L'accumulateur de haute pression 33 est disposé sous le sous-bassement 50 du véhicule, longitudinalement dans l'axe XX' de ce véhicule. L'accumulateur basse pression 34 est fixé rigidement à l'extrémité arrière de cet accumulateur haute pression 33, en y étant disposé sensiblement transversalement.

De plus, ce sous-ensemble hydraulique présentant une forme générale en « T », comporte avantageusement une partie longitudinale disposée sous le sous-bassement, dans un tunnel longitudinal 52, et une partie transversale disposée dans un creux transversal 54 disponible sous les sièges prévus pour des passagers arrière du véhicule. Ce type de tunnel est souvent prévu dans certains véhicules pour recevoir un tube d'échappement et ce type de creux transversal est souvent prévu dans certains véhicules pour recevoir un réservoir à carburant.

Dans cette implantation, la ligne d'échappement (non représentée passe en dehors du tunnel pour laisser place à l'accumulateur haute pression.

La machine hydraulique reliée à des roues motrices (non représentées), peut fonctionner en moteur pour délivrer une puissance mécanique à ces roues motrices en prélevant de l'énergie stockée dans les accumulateurs de pression, ou en pompe pour charger ces accumulateurs en freinant le véhicule, de manière à récupérer l'énergie cinétique de ce véhicule.

Cette utilisation d'énergie hydraulique stockée permet d'optimiser le fonctionnement du moteur thermique 30, et de réduire sa consommation ainsi que les émissions de gaz polluants. Le stockage d'énergie hydraulique permet de plus de rouler en mode hydraulique avec zéro émission, appelé mode « ZEV », le moteur thermique restant à l'arrêt.

Lorsque le véhicule roule en mode hydraulique pur « ZEV » et donc moteur thermique arrêté, l'alimentation électrique du réseau de bord doit continuer à être assurée en toute transparence vis-à-vis du conducteur et des passagers du véhicule (confort).

Les stockeurs d'énergie électrique tels que les batteries au plomb traditionnellement utilisées pour fournir du courant au réseau de bord, ne sont pas adaptées au fonctionnement des véhicules hybrides hydrauliques dont le fonctionnement en mode impulsionnel sollicite la batterie sur des cycles de charges et de décharges très courts et répétés , ce qui tend à détériorer les batteries très rapidement (vieillissement prématuré).

Par mode impulsionnel, on entend un mode de fonctionnement dans lequel le moteur thermique, bien que non utilisé pour la traction du véhicule, est sollicité pendant une période très courte et de manière répétée, pour pouvoir activer la pompe hydraulique destinée à maintenir une pression suffisante dans les accumulateurs de pression.

Il est connu de la demande de brevet n° 1161716 (FR-A-2984239), déposée par la demanderesse, un véhicule hybride hydraulique comprenant un stockeur d'énergie électrique pour alimenter le réseau électrique de bord quand le moteur thermique est arrêté. Ce stockeur se charge et se décharge très rapidement en acceptant des courants élevés, sans détériorer le cyclage batterie et donc sa durée de vie. Il est implanté sous le sous-bassement du véhicule et est supporté par un des accumulateurs hydrauliques qui est également implanté sous le sous-bassement du véhicule.

Ce type de stockeur nécessite un boîtier de pilotage dédié pour piloter l'énergie stockée.

Ce boîtier comprend des composants électroniques de puissance qui chauffent, qui sont sensibles au choc et qui sont de plus sensibles à la température environnante.

Il est également connu de la demande de brevet n° 1161804 (FR-A-2984238), déposée par la demanderesse, de disposer le boîtier de pilotage de l'autre côté du sous-bassement, dans l'habitacle, à proximité immédiate du stockeur ; le boîtier de pilotage étant relié au stockeur par un faisceau de câbles électriques traversant le sous-bassement.

Toutefois, cette implantation ne permet pas de disposer un grand nombre d'UCAPS sous le sous-bassement du véhicule et réduit ainsi l'autonomie du véhicule en mode ZEV.

Pour pallier cet inconvénient, la présente invention propose une nouvelle implantation apte à augmenter l'autonomie du véhicule hybride hydraulique lorsque ce dernier évolue en mode ZEV.

A cet effet, l'invention a pour objet un véhicule hybride hydraulique, comportant un moteur thermique entraînant une pompe hydraulique connectée à des accumulateurs de pression, l'un des accumulateurs de forme tubulaire allongée étant disposé longitudinalement suivant l'axe longitudinal du véhicule dans un tunnel central longitudinal, défini par un renfoncement ménagé dans le sous-bassement du véhicule, sous le plancher du véhicule, ledit véhicule comportant en outre un stockeur d'énergie électrique de type comportant une pluralité de cellules de stockage d'énergie électrique de type UCAPs, aptes à assurer l'alimentation du réseau de bord du véhicule quand le moteur thermique est arrêté, et un boîtier de pilotage de la charge du stockeur d'énergie électrique, caractérisé en ce que le stockeur et le boîtier de pilotage sont disposés dans l'habitacle et au voisinage l'un de l'autre, sur ou au voisinage immédiat du plancher du véhicule

Selon une caractéristique, le stockeur d'énergie électrique comporte au moins un premier pack étanche comprenant un premier nombre déterminé d'UCAPs, disposé dans une première zone du plancher apte à recevoir un des sièges du véhicule, et le boîtier de pilotage est disposé au voisinage immédiat du pack étanche.

Selon une autre caractéristique, la première zone est apte à recevoir un des sièges avant du véhicule.

Selon une autre caractéristique, le stockeur comprend au moins un deuxième pack étanche comprenant un deuxième nombre déterminé d'UCAPs, disposé dans une deuxième zone du plancher, apte à recevoir un autre siège avant ; les première et deuxième zones étant séparées par une troisième zone apte à recevoir une console centrale.

Selon une autre caractéristique, le boîtier de pilotage est disposé dans la troisième zone, et il est relié aux deux packs par deux faisceaux de câbles électriques.

Selon une autre caractéristique, la première zone est délimitée par les traverses d'assise aptes à recevoir le siège avant passager, et la deuxième zone est délimitée par les traverses d'assise aptes à recevoir le siège avant conducteur.

Selon une autre caractéristique, le véhicule comporte des circuits de dégazage reliant respectivement les premier et second packs étanches au tunnel.

Selon une autre caractéristique, le boîtier de pilotage est disposé en lieu et place d'un frein de stationnement manuel.

Selon une autre caractéristique, le boîtier de pilotage est disposé en lieu et place d'un frein de stationnement manuel.

Un avantage de l'implantation du boîtier de pilotage et des UCAPS dans l'habitacle, à proximité du stockeur, est que la température des UCAPs et du boîtier est régulée par le système de climatisation de l'habitacle tout en étant protégé contre les chocs divers.

Un autre avantage est l'intégration optimale du boîtier et des UCAPs dans l'habitacle d'un véhicule sans modification de sa structure ni de ses équipements.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1, déjà décrite, est une vue de dessous schématique et partielle, d'un véhicule automobile hybride hydraulique de l'état de l'art ;
- la figure 2 illustre une implantation d'UCAPs et de leur boîtier de pilotage, selon une vue de dessus, sur le plancher de la partie avant de l'habitacle d'un véhicule hybride hydraulique selon l'invention ;
- la figure 3 illustre une vue en perspective d'un boîtier de pilotage ; et
- la figure 4 illustre l'implantation du boîtier de pilotage, selon une vue latérale de l'habitacle du véhicule selon l'invention.

Sur les figures, on a fait apparaître le référentiel XYZ qui est habituellement utilisé pour repérer un véhicule dans l'espace.

Sur les figures, les éléments communs avec ceux de la figure 1 (état de la technique) sont désignés, respectivement, par les mêmes références numériques.

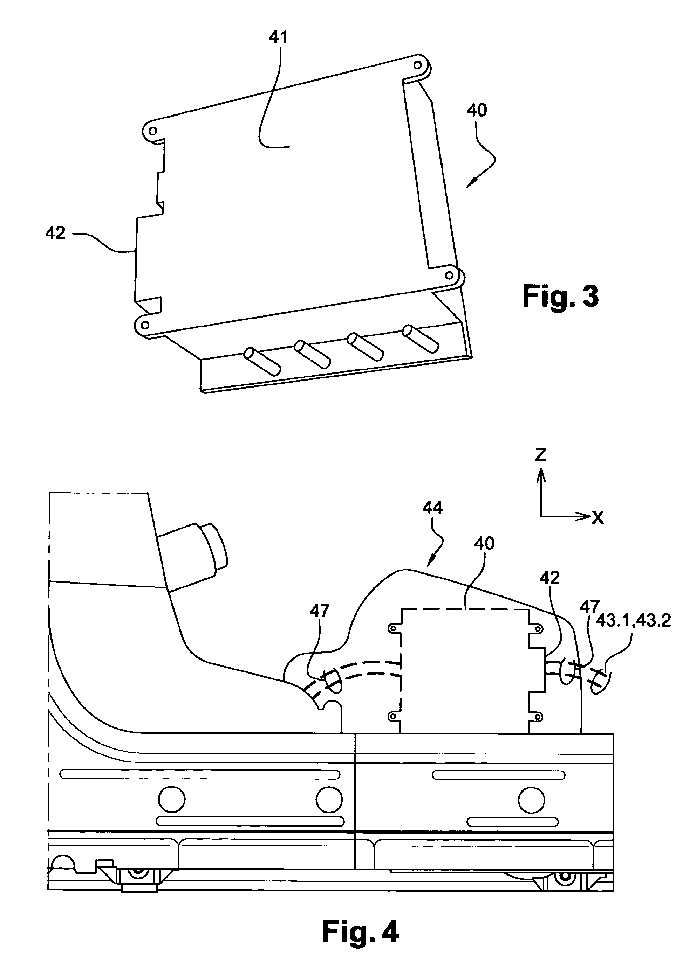

Un boîtier de pilotage 40 illustrée à la figure 3, présente la forme générale d'un parallélépipède rectangle comportant une embase ou platine de fixation 41, et un connecteur électrique 42 faisant saillie d'une des faces latérales du boîtier.

Ce type de boîtier de pilotage est connu. Il comprend des composants électroniques de puissance (redresseur, convertisseur, ..) aptes à adapter les courants délivrés par le stockeur et notamment les UCAPs 23.1-23.10, au réseau électrique de bord tout en sécurisant ce même réseau (non représenté).

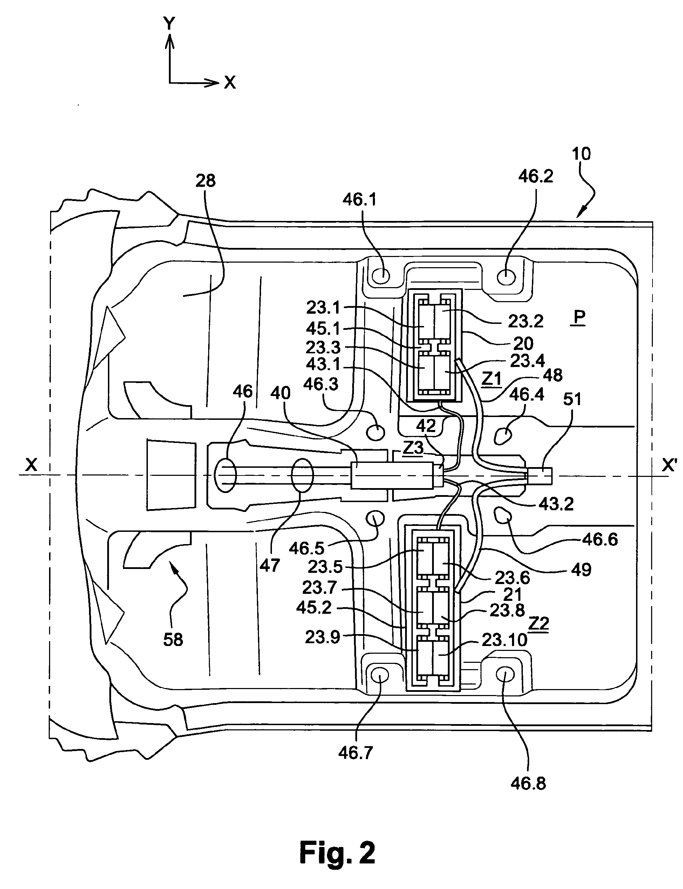

Le boîtier est disposé à l'intérieur de l'habitacle du véhicule (fig. 2 et 4) dans une zone correspondant à la console centrale 44 qui est située entre les deux sièges avant. C'est dans cette zone que se situe généralement le frein de stationnement du véhicule manuel ou électrique.

Dans l'exemple décrit, le boîtier repose sur, ou au voisinage du, plancher P du véhicule par une de ses face latérales de telle manière que le connecteur électrique du boîtier soit orienté vers l'arrière du véhicule (vers la droite en considérant l'orientation de la figure 2)

Le boîtier est ainsi complétement intégré dans la console sans nécessiter de modification de l'aspect extérieur de la console.

La platine de fixation est disposée dans un plan vertical parallèle au plan médian de la console centrale.

Sa fixation est faite dans la console centrale.

Le boîtier et les faisceaux de câbles sont invisibles du conducteur tout en étant facilement accessibles pour des interventions en après-vente.

De part leur implantation et leur disposition, le boîtier et les UCAPs profitent avantageusement du circuit de climatisation 58 de l'habitacle dont une partie du circuit passe à proximité du boîtier et des UCAPs permettant ainsi d'évacuer les calories dans l'habitacle.

Le fonctionnement en mode ZEV d'un véhicule hybride hydraulique, nécessite un grand nombre d'UCAPs.

Dans l'exemple considéré, illustré à la figure 2, dix UCAPs 23.1 à 23.10 sont disposées dans l'habitacle, sur le plancher, en étant réparties selon un premier pack étanche 20 de quatre UCAPs 23.1 à 23.4 et un second pack étanche 21 de six UCAPs 23.5 à 23.10.

Le premier pack étanche est disposé dans l'espace du plancher P défini à l'intérieur d'une zone Z1 délimitée par les traverses d'assise 46.1 à 46.4 du siège avant passager, et le deuxième pack étanche est disposé dans l'espace du plancher défini à l'intérieur d'une zone Z2 délimitée par les traverses d'assise 46.5 à 46.8 du siège avant conducteur.

Des premiers faisceaux de câbles électriques 43.1 et 43.2 permettent de relier le boîtier de pilotage à leurs packs respectifs 20 et 21.

Chaque premier faisceau est connecté, à une première extrémité, au connecteur électrique du boîtier et, à une deuxième extrémité, aux circuits électriques 45.1 et 45.2 de leur pack respectif 20 et 21.

Avantageusement, l'implantation optimisée du boîtier et des packs dans l'habitacle, permet de réduire la longueur des câbles à leur minimum et donc leur coût.

Le boîtier de pilotage est par ailleurs connecté à la batterie principale du véhicule (non représentée) par un second faisceau de câbles 47 qui peut partager le même connecteur 42 ou être connecté au boîtier par un second connecteur spécifique non représenté.

Tout comme le boîtier, les faisceaux de câbles sont invisibles du conducteur car ils sont cachés par la console et par les sièges avant.

Un orifice 46 est managé dans le tablier 28 du véhicule de manière à définir un passage, ou traversée, pour le faisceau entre le boîtier et la batterie principale qui est hébergée dans le compartiment moteur et donc à l'avant du véhicule.

Cette traversée peut correspondre avantageusement à la traversée habituellement prévue pour le passage des câbles de commande d'une boîte de vitesses quand le véhicule en est dépourvu.

Des circuits de dégazage 48 et 49, reliés respectivement aux packs 20 et 21, sont aménagés entre les packs et une partie du sous-bassement 50 du véhicule correspondant au tunnel 52 habituellement utilisé pour le passage de la ligne d'échappement. Dans l'implantation considérée telle qu'illustrée à la figure 1, le tunnel est réservé pour l'accumulateur haute pression 33 ; la ligne d'échappement, non représentée, ayant été déportée du tunnel. Les circuits de dégazage sont avantageusement disposés dans le tunnel, entre le sous-bassement du véhicule, et l'accumulateur haute pression.

Les circuits de dégazage communiquent avec le sous-bassement du véhicule via une deuxième ouverture, ou traversée 51.

Les UCAPs sont d'abord enfermées dans leurs packs respectifs et sont ensuite montées en préparation d'organes mécaniques (POM) sur la caisse avant l'opération de coiffage tout comme le boîtier, les premiers faisceaux de liaison boîtier/UCAPs et le second faisceau reliant le boîtier à la batterie.

Le raccordement du second faisceau à la batterie principale se fait après l'opération de coiffage.

L'implantation des UCAPs et du boîtier dans l'habitacle permet d'augmenter le nombre d'UCAPs et donc de faire du ZEV avec une plus grande autonomie. Il est possible de remplacer une partie des UCAPs par une batterie Li-ion afin d'augmenter encore l'autonomie électrique

## Revendications

1. Véhicule hybride hydraulique (10), comportant un moteur thermique (30) entraînant une pompe hydraulique (18) connectée à des accumulateurs de pression (33, 34), l'un (33) des accumulateurs de forme tubulaire allongée étant disposé longitudinalement suivant l'axe longitudinal (XX') du véhicule dans un tunnel central longitudinal (52), défini par un renfoncement ménagé dans le sous-bassement (50) du véhicule, sous le plancher (P) du véhicule, ledit véhicule comportant en outre un stockeur d'énergie électrique (20, 21) de type comportant une pluralité de cellules de stockage d'énergie électrique (23) de type UCAPs, aptes à assurer l'alimentation du réseau de bord du véhicule quand le moteur thermique est arrêté, et un boîtier (40) de pilotage de la charge du stockeur d'énergie électrique, **caractérisé en ce que** le stockeur et le boîtier de pilotage sont disposés dans l'habitacle et au voisinage l'un de l'autre, sur ou au voisinage immédiat du plancher du véhicule

2. Véhicule selon la revendication précédente, **caractérisé en ce que** le stockeur d'énergie électrique comporte au moins un premier pack étanche (20) comprenant un premier nombre déterminé d'UCAPs, disposé dans une première zone (Z1) du plancher apte à recevoir un des sièges du véhicule, et **en ce que** le boîtier de pilotage est disposé au voisinage immédiat du pack étanche.

3. Véhicule selon la revendication précédente, **caractérisé en ce que** la première zone est apte à recevoir un des sièges avant du véhicule.

4. Véhicule selon la revendications 3, **caractérisé en ce que** le stockeur d'énergie comprend au moins un deuxième pack étanche (21) comprenant un deuxième nombre déterminé d'UCAPs, disposé dans une deuxième zone (Z2) du plancher apte à recevoir un autre siège avant ; les première et deuxième zones étant séparées par une troisième zone (Z3) apte à recevoir une console centrale.

5. Véhicule selon la revendication précédente, **caractérisé en ce que** le boîtier de pilotage est disposé dans la troisième zone, et **en ce qu'**il est relié aux deux packs par deux faisceaux de câbles électriques (43.1 et 43.2).

6. Véhicule selon la revendication précédente , **caractérisé en ce que** la première zone est délimitée par les traverses d'assise (46.1 à 46.4) aptes à recevoir le siège avant passager, et **en ce que** la deuxième zone est délimitée par les traverses d'assise (46.5 à 46.8) aptes à recevoir le siège avant conducteur.

7. Véhicule selon la revendication précédente, **caractérisé en ce qu'**il comporte des circuits de dégazage (48 et 49) reliant respectivement les premier et second packs étanches au tunnel.

8. Véhicule selon l'une des revendications précédentes, **caractérisé en ce que** le boîtier de pilotage est disposé en lieu et place d'un frein de stationnement manuel.

## Patentansprüche

1. Hydraulisches Hybridfahrzeug (10), das eine Brennkraftmaschine (30) umfasst, die eine Hydraulikpumpe (18) antreibt, die mit Druckspeichern (33, 34) verbunden ist, wobei einer (33) der Druckspeicher mit länglicher Röhrenform längs entlang der Längsachse (XX') des Fahrzeugs in einem zentralen Längstunnel (52), der von einer Verstärkung definiert ist, die in dem Unterbau (50) des Fahrzeugs unter dem Fußboden (P) des Fahrzeugs eingerichtet ist, eingerichtet ist, wobei das Fahrzeug außerdem einen Stromspeicher (20, 21) des Typs umfasst, der eine Mehrzahl von Stromspeicherzellen (23) des Typs UCAP umfasst, der geeignet ist, die Versorgung des Bordnetzes des Fahrzeugs sicherzustellen, wenn die Brennkraftmaschine gestoppt ist, und ein Gehäuse (40) zum Steuern der Last des Stromspeichers, **dadurch gekennzeichnet, dass** der Speicher und das Steuergehäuse in der Fahrgastzelle und in der Nähe voneinander auf oder in unmittelbarer Nähe des Fußbodens des Fahrzeugs angeordnet sind.

2. Fahrzeug nach dem vorhergehenden Anspruch, **dadurch gekennzeichnet, dass** der Energiespeicher mindestens ein erstes dichtes Paket (20) umfasst, das eine erste bestimmte Anzahl von UCAPs umfasst, das in einer ersten Zone (Z1) des Fußbodens angeordnet ist, die geeignet ist, einen der Sitze des Fahrzeugs aufzunehmen, und dass das Steuergehäuse in unmittelbarer Nähe des dichten Pakets angeordnet ist.

3. Fahrzeug nach dem vorhergehenden Anspruch, **dadurch gekennzeichnet, dass** die erste Zone geeignet ist, einen der Vordersitze des Fahrzeugs aufzunehmen.

4. Fahrzeug nach Anspruch 3, **dadurch gekennzeichnet, dass** der Energiespeicher mindestens ein zweites dichtes Paket (21) umfasst, das eine zweite bestimmte Anzahl von UCAPs umfasst, die in einer zweiten Zone (Z2), die angepasst ist, um einen anderen Vordersitz aufzunehmen, angeordnet ist, wobei die erste und die zweite Zone durch eine dritte Zone (Z3) getrennt sind, die geeignet ist, eine zentrale Konsole aufzunehmen.

5. Fahrzeug nach dem vorhergehenden Anspruch, **dadurch gekennzeichnet, dass** das Steuergehäuse in der dritten Zone angeordnet ist, und dass es mit den zwei Paketen durch zwei Stromkabelbündel (43.1 und 43.2) verbunden ist.

6. Fahrzeug nach dem vorhergehenden Anspruch, **dadurch gekennzeichnet, dass** die erste Zone durch Sitzquerträger (46.1 bis 46.4) begrenzt ist, die geeignet sind, den Beifahrersitz aufzunehmen, und dass die zweite Zone durch Sitzquerträger (46.5 bis 46.8) begrenzt ist, die geeignet sind, den Fahrersitz aufzunehmen.

7. Fahrzeug nach dem vorhergehenden Anspruch, **dadurch gekennzeichnet, dass** es Entgasungskreisläufe (48 und 49) umfasst, die jeweils das erste und das zweite dichte Paket mit dem Tunnel verbinden.

8. Fahrzeug nach einem der vorhergehenden Ansprüche, **dadurch gekennzeichnet, dass** das Steuergehäuse an Stelle einer manuellen Feststellbremse angeordnet ist.

## Claims

1. A hydraulically powered hybrid vehicle (10), comprising a combustion engine (30) driving a hydraulic pump (18) connected to pressure accumulators (33, 34), one (33) of the accumulators, of elongate tubular shape, being positioned longitudinally along the longitudinal axis (XX') of the vehicle in a longitudinal central tunnel (52), defined by an impression made in the understructure (50) of the vehicle, under the floor (P) of the vehicle, said vehicle further comprising an electrical energy store (20, 21) of the type comprising a plurality of electrical energy storage cells (23) of the UCAPs type, able to power the vehicle on-board network when the combustion engine is not running, and a control unit (40) for controlling the charge of the electrical energy store, **characterized in that** the store and the control unit are positioned in the passenger compartment and near one another, on or in close proximity to the floor of the vehicle.

2. The vehicle according to the preceding claim, **characterized in that** the electrical energy store comprises at least a first sealed pack (20) including a first specified number of UCAPs, positioned in a first zone (Z1) of the floor able to receive one of the seats of the vehicle, and **in that** the control unit is positioned in close proximity to the sealed pack.

3. The vehicle according to the preceding claim, **characterized in that** the first zone is able to receive one of the front seats of the vehicle.

4. The vehicle according to Claim 3, **characterized in that** the energy store includes at least a second sealed pack (21) including a second specified number of UCAPs, positioned in a second zone (Z2) of the floor able to receive another front seat; the first and second zones being separated by a third zone (Z3) able to receive a central console.

5. The vehicle according to the preceding claim, **characterized in that** the control unit is positioned in the third zone, and **in that** it is connected to the two packs by two bundles of electric cables (43.1 and 43.2).

6. The vehicle according to the preceding claim, **characterized in that** the first zone is delimited by the seat part cross-members (46.1 to 46.4) able to receive the front passenger seat, and **in that** the second zone is delimited by the seat part cross-members (46.5 to 46.8) able to receive the front driver's seat.

7. The vehicle according to the preceding claim, **characterized in that** it comprises degassing circuits (48 and 49) connecting respectively the first and second sealed packs to the tunnel.

8. The vehicle according to one of the preceding claims, **characterized in that** the control unit is positioned instead of a manual parking brake.
